# EUROPÄISCHE PATENTANMELDUNG

(11) **EP 2 423 168 A1**
(43) Veröffentlichungstag der Anmeldung: **29.02.2012**
(21) Anmeldenummer: 11006697.4
(22) Anmeldetag: 16.08.2011
(51) Int. Cl.: C02F 1/34, C02F 1/36, D21C 11/00, C02F 103/28

(54) **Verfahren zur Behandlung von Brauchwasser bei der Papierherstellung**

(30) Priorität: 24.08.2010 DE 102010035317
(71) Anmelder: Reiflock Abwassertechnik GmbH, 76532 Baden-Baden (DE)
(72) Erfinder:
(74) Vertreter: Lemcke, Brommer & Partner

(57) **Zusammenfassung**

Vorgeschlagen wird ein Verfahren zur Behandlung von Brauchwasser bei der Papierherstellung, bei dem Dampf und Brauchwasser gemischt werden, welches sich dadurch auszeichnet, dass der Dampf zunächst auf eine Geschwindigkeit beschleunigt wird, die über seiner Schallgeschwindigkeit liegt, und ihm dann Brauchwasser zugemischt wird und das dann in dem sich ergebenden Gemisch der Dampf in einem Verdichtungsstoß kondensiert wird und das Gemisch auf eine Geschwindigkeit gebremst wird, die unterhalb der Schallgeschwindigkeit des Gemisches liegt. Durch den Verdichtungsstoß können Partikel innerhalb des Brauchwassers einem Zerplatzen oder einem Zerfasern unterzogen werden, so dass sich dieses Verfahren insbesondere eignet, um im Rahmen des De-Inkens, die Stoffzerkleinerung oder einer Bakterienlastverringerung eingesetzt zu werden.

## Beschreibung

Die Erfindung betrifft ein Verfahren zur Behandlung von Brauchwasser bei der Papierherstellung, bei dem Dampf und Brauchwasser gemischt werden.

Bei der Herstellung von Papier werden mehrere Verfahrensschritte zum Teil auch kombiniert oder mehrfach durchgeführt, für die Wasser benötigt wird. Dieses Wasser kann als Frischwasser z. B. aus dem öffentlichen Netz stammen oder wird von dem Papierhersteller auch als Brunnenwasser oder Oberflächenwasser selbst gewonnen, wobei es dabei ffg. auch behandelt werden muss, um die gewünschten Eigenschaften zu haben. Dabei kann das Wasser auch mit Bioziden behandelt werden.

Zunächst werden Faserrohstoffe dann in Wasser suspendiert. Aus dieser Suspension werden anschließend störende Bestandteile entfernt. Hierzu gehört auch, dass aus der Faserstoffsuspension z. B. durch Flotation oder Wäsche Druckfarben entfernt werden, was man als De-inken bezeichnet.

Anschließend wird je nach gewünschter Papiereigenschaft ein Mahlen durchgeführt, in dem Fasern gekürzt und fibrilliert werden. Anschließend erfolgt eine Verdünnung der Suspension mit Wasser, so dass je nach gewünschten Eigenschaften des fertigen Produktes und den Erfordernissen der jeweiligen Papiermaschine eine Blattbildung möglich wird.

Nachdem in den bisherigen Schritten jeweils Wasser zugesetzt wird, wird beim Blattbilden auf umlaufenden Lang- oder Rundsieben durch einen raschen Wasserentzug ein Papiervlies gebildet, das anschließend durch Saugen und Pressen weiter behandelt wird, wobei dem Papiervlies weiter Wasser entzogen wird. Schließlich wird das Papiervlies durch eine thermische Behandlung getrocknet, bevor es abschließend durch Imprägnieren, Streichen, Beschichten, chemisches und/oder mechanisch thermisches Behandeln inner- oder außerhalb der Papiermaschine veredelt wird, wodurch besondere Produkteigenschaften zu erzielen sind.

Die bei diesen Verfahrensschritten entstehenden Abwässer fallen in den unterschiedlichsten Mengen und Beschaffenheiten an, da mehr als 3000 verschiedene Papiersorten bekannt sind, die jeweils spezifische Herstellverfahren haben.

So ist die Menge des anfallenden Abwassers z. B. auch von den eingesetzten Rohstoffen abhängig und insbesondere auch von den gewünschten Produkteigenschaften und der angewandten Technologie, um diese zu erreichen.

Es ist dabei bekannt, die verschiedensten Abwässer auch im Kreislauf zu führen, wobei das Wasser, das im Bereich einer Papiermaschine in einem Primärkreislauf geführt wird, als "Siebwasser" bezeichnet wird, während Wasser, das in einem Sekundärkreislauf geführt wird, der die Papiermaschine sowie ggf. einen nachgeschalteten Stofffänger und/oder eine entsprechende Stoffaufbereitung umfasst, als "Klarwasser" bezeichnet wird.

Derartiges Klarwasser kann auch noch einmal durch eine spezielle Abwasserreinigung geführt werden, so dass es dann als "gereinigtes Abwasser" in einem Tertiärkreislauf geführt wird.

Insbesondere enthalten derartige Abwässer sowohl gelöste als auch ungelöste organische Inhaltsstoffe aus dem Holz sowie aus Roh- und Hilfsstoffen. Derartige organische Inhaltsstoffe bilden innerhalb der Kreisläufe insofern ein Problem, als sie zu einem unerwünschten Bakterienwachstum führen können. Die entstehenden Bakterienkulturen führen zu einer unerwünschten Bildung von Schleim oder Schlamm innerhalb des im Kreislauf geführten Wassers. Diese können sich beispielsweise zu Klumpen zusammenballen und wenn diese sich irgendwo lösen zu unerwünschten Ablagerungen auf den Papierbahnen führen, was bei dem fertigen Papierprodukt dann unerwünschte Flecken etc. bewirkt.

Um derartiges Bakterienwachstum und damit einhergehende Schleim- und Schlammbildung u. s. w. zu verhindern, ist es bekannt, auch den in den genannten Kreisläufen geführten Abwässern Biozide zuzusetzen.

Dies führt aber einerseits zu erhöhten Kosten bei der Papierherstellung. Andererseits führen derartige Chemikalien zu erhöhten Problemen bei einer abschließenden Behandlung von Abwasser, z. B. wenn es in die öffentliche Kanalisation abgeleitet werden soll.

Nahezu das gesamte Abwasser aus der Papierindustrie wird nämlich nach einer mechanischen Reinigung biologisch behandelt. Die mechanische Reinigung umfasst dabei das Entfernen der ungelösten Stoffe, wozu Sedimentations-, Filtrations- oder Flotationsanlagen eingesetzt werden. In der anschließenden biologischen Reinigung des Abwassers wird dann in den meisten Fällen ein Belebtschlamm-Verfahren durchgeführt, z. B. mit einstufig vollständig durchmischten Reaktoren (ggf. mit vorgeschalteter Belüftung eines Rücklaufschlammes), als Belebungskaskaden (d. h. mit hintereinander geschalteten Belebungsbecken) oder als zweistufige Belebungsanlagen, d. h. mit einer Zwischenklärung zwischen den beiden Stufen. - Es ist nachvollziehbar, dass bei derartigen biologischen Kläranlagen die oben diskutierten Biozide kontraproduktiv sind.

Alle bisher diskutierten Wasser, (Frischwasser, Brunnenwasser, Oberflächenwasser, Abwasser, Siebwasser, Klarwasser etc.) werden Im Rahmen dieser Erfindung zusammenfassend als Brauchwasser bezeichnet.

Aufgabe der vorliegenden Erfindung ist es daher, ein Verfahren zur Behandlung von Brauchwasser bei der Papierherstellung anzugeben, bei dem auf einen Einsatz von Bioziden oder ähnlichen Chemikalien wie oben beschrieben verzichtet werden kann.

Diese Aufgabe wird erfindungsgemäß dadurch gelöst, dass das Brauchwasser mit Dampf gemischt wird, wobei der Dampf zunächst auf eine Geschwindigkeit beschleunigt wird, die über seiner Schallgeschwindigkeit liegt, und ihm dann Brauchwasser zugemischt wird und dass dann in dem sich ergebenden Gemisch der Dampf in einem Verdichtungsstoß kondensiert wird und das Gemisch auf eine Geschwindigkeit gebremst wird, die unterhalb der Schallgeschwindigkeit des Gemisches liegt.

Grundsätzlich ist es zwar bekannt, Dampf in Brauchwasser einzuführen. Dies erfolgt üblicherweise z. B. durch Einblasen, um damit das Brauchwasser zu erwärmen. Dabei kondensiert der Dampf oft aber nur teilweise in dem Brauchwasser, während ein großer Teil des Dampfes quasi ungenutzt wieder aus dem Brauchwasser austritt.

Hiervon unterscheidet sich das vorliegend beschriebene Verfahren bereits darin, dass bei ihm eine innige Vermischung von Dampf und Brauchwasser bewirkt wird, indem das Brauchwasser dem mit Überschall strömenden Dampf zugesetzt wird. Der Erfindung liegt dabei die besondere Erkenntnis zugrunde, dass eine derartige Vermischung von mit Überschallgeschwindigkeit strömendem Dampf mit Brauchwasser eine extrem homogene Mischung ergibt.

Hierfür wird zum einen der hohe Geschwindigkeitsunterschied verantwortlich gemacht zwischen dem Dampf einerseits, der Überschallgeschwindigkeit hat, und dem Brauchwasser andererseits, das eine demgegenüber vernachlässigbare Geschwindigkeit aufweist. Hinzu kommt aber auch, dass sich an der Stelle dieser Vermischung auch ein Zwei-Phasen-Gemisch bildet und dass sich die Schallgeschwindigkeit eines Zwei-Phasen-Gemisches, wie es dann bei dem Dampf-Brauchwasser-Gemisch vorliegt, über dessen prozentuale Zusammensetzung verändert, und zwar nicht linear.

Das heißt, die Schallgeschwindigkeit ist bei 100 % Dampf anders als bei 100 % Flüssigkeit und ändert sich in Abhängigkeit des Verhältnisses von Dampf zu Flüssigkeit, Dabei ist die Schallgeschwindigkeit sowohl bei 100 % Dampf als auch bei 100 % Flüssigkeit höher als beim Vorliegen eines Gemisches.

Damit strömt letztlich sowohl der für das Mischen zugeführte Dampf mit einer Geschwindigkeit, die größer ist als die (für Dampf spezifische) Schallgeschwindigkeit, als auch das entstehende Gemisch aus Dampf und Brauchwasser, dessen Geschwindigkeit ebenfalls höher ist als die (für das Gemisch spezifische) Schallgeschwindigkeit.

Obwohl also die absolute Geschwindigkeit des Gemisches aus Dampf und Brauchwasser erheblich niedriger ist als die absolute Geschwindigkeit des Dampfes, strömen beide erfindungsgemäß jeweils mit (allerdings spezifischen, unterschiedlichen) Überschallgeschwindigkeiten.

Durch die anschließende Kondensation des Dampfes innerhalb der Zwei-Phasen-Strömung in einem Verdichtungsstoß wird dann einerseits die dabei freiwerdende Kondensationswärme vollständig auf den Brauchwasseranteil des Gemisches übertragen. Dieser wird damit einerseits in kürzester Zeit auf eine relativ hohe Temperatur von beispielsweise über 70 °C gebracht.

Andererseits ergibt sich dabei aber aufgrund des in dem Verdichtungsstoß lokal eng begrenzten Überganges von der Überschallströmung auf die Unterschallströmung bei gleichzeitigem Übergang von einer Zwei-Phasen-Strömung aus Dampf und Brauchwasser zu einer Ein-Phasen-Strömung von erhitztem Brauchwasser an dieser Stelle kontinuierlich eine erhebliche lokale Druckerhöhung.

Hierdurch wird der für die vorliegende Erfindung wesentliche Effekt erreicht, dass hier auf einzelne Partikel, die sich im Brauchwasser befinden, hohe Scherkräfte wirken, die zu einem Aufbrechen, einer Zerkleinerung und einem Zerplatzen dieser Partikel führen.

Zu diesen im Brauchwasser vorhandenen Partikeln gehören dabei auch die Bakterien, die normalerweise von den in dem Brauchwasser vorhandenen organischen Inhaltsstoffen zum Wachstum angeregt werden.

Es besteht somit die Möglichkeit, statt des Einsatzes von unerwünschten Bioziden das hier vorgestellte Verfahren zu nutzen, um damit die Bakterienlast innerhalb des Brauchwassers zu verringern, so dass auch die oben beschriebene Schlamm- und Schleimbildung unterbunden wird.

Ein besonders positiver Effekt wird dadurch erreicht, dass zunächst eine intensive Mischung von Dampf und Brauchwasser erfolgt und dann bei der anschließenden Kondensation in einem Druckstoß die Kondensationswärme des Dampfes vollständig auf das Brauchwasser übertragen wird und dieses sich somit erwärmt. Dadurch wird nämlich die Viskosität des Brauchwassers abgesenkt, so dass beim Einsatz dieses erwärmten Brauchwassers z. B. in der Papiermaschlne die abschließende Entwässerung insbesondere bei der Blattbildung und der weiteren Behandlung des zunächst entstehenden Papiervlieses erheblich schneller und besser stattfindet als bei kaltem Brauchwasser.

Man kann also hier die Reduzierung der Bakterienlast, als auch eine vollständige Übertragung der Energie des Dampfes auf das Brauchwasser und eine dadurch verbesserte Entwässerung als Vorteile der vorliegenden Erfindung ins Feld führen.

Wie oben angesprochen ist es im Zuge der Erfindung notwendig, dass der Dampf in einem Verdichtungs- bzw. Druckstoß kondensiert wird, denn nur die dabei entstehende Druckerhöhung führt zu dem angesprochenen Zerplatzen der im Brauchwasser-Anteil des Gemisches vorhandenen Teilchen.

Dieser Druckstoß kann dabei über konstruktive Elemente wie eine konvergente Düse oder durch eine entsprechende Drosselung des abströmenden Mediums bewirkt und bezüglich seines Entstehungsortes beeinflusst werden. Auch eine gezielte Zugabe von weiterer Flüssigkeit, insbesondere von weiterem Brauchwasser zur Bewirkung des Druckstoßes ist möglich.

Das mit dem Dampf gemischte Brauchwasser kann dabei entnommen sein aus dem Siebwasser, aus dem Klarwasser oder aus dem gereinigten Abwasser. Bei derart behandeltem Brauchwasser kann es sich dabei auch nur um einen Teilstrom der genannten Wasser handeln.

Bei einer besonders bevorzugten Ausführungsform des Verfahrens wird dem Dampf, der vor seiner Beschleunigung auf die Überschallgeschwindigkeit einen Druck von 0,1 bar bis 5 bar, insbesondere von 3 bar hat und eine Temperatur von 100 °C bis 160 °C vorzugsweise von 140 °C, Brauchwasser zugemischt, das eine Temperatur in dem Bereich von 5 °C bis 60 °C hat, insbesondere von 40 °C.

Das Verhältnis von Masse an Dampf zu Masse an Brauchwasser sollte dabei vorzugsweise im Bereich von 0,1:100 bis 20:100. insbesondere von 2:100 liegen.

Bei einer besonderen Weiterbildung der Erfindung wird das erfindungsgemäße Verfahren benutzt, um damit aus der wie eingangs beschrieben ursprünglich hergestellten Suspension aus Faserrohstoffen und Wasser die Druckfarben abzutrennen.

Hierzu wird die die Druckfarben tragenden Faserrohrstoffe und Brauchwasser enthaltende Stoffsuspension in der oben beschriebenen Weise dem mit Überschallgeschwindigkeit strömenden Dampf zugemischt. Durch den anschließenden Verdichtungsstoß wird dann auch ein besseres Ablösen der Druckfarbenreste von den Fasern erreicht, so dass die anschließende Flotation oder Wäsche zu erheblich besseren Ergebnissen beim De-inken führt.

Es ist auch möglich, den Mahlprozess, in dem während der Papierherstellung üblicherweise Fasern gekürzt und fibrilliert werden, durch ein entsprechendes Durchführen des erfindungsgemäßen Verfahrens mit diese Fasern tragender Stoffsuspension durchzuführen, und in einem erfindungsgemäßen Schritt diese Stoffsuspension zu mit Überschallgeschwindigkeit strömendem Dampf zuzuführen und anschließend den Dampf innerhalb des Zwei-Phasen-Gemisches in einem Verdichtungsstoß zu kondensieren. Dies führt zu einer sehr guten Zerfaserung der Rohstoffe, die je nach Eigenschaften eines zu fertigenden Papiers gewünscht ist.

Weitere Vorteile und Merkmale der Erfindung ergeben sich aus der nachfolgenden Beschreibung eines Ausführungsbeispiels. Dabei zeigt
- Figur 1: die Prinzipsskizze der Wasserläufe im Bereich einer Papiermaschine.
- Figur 2: die Prinzipsskizze einer Vorrichtung zur Vermischung von Dampf und Brauchwasser.

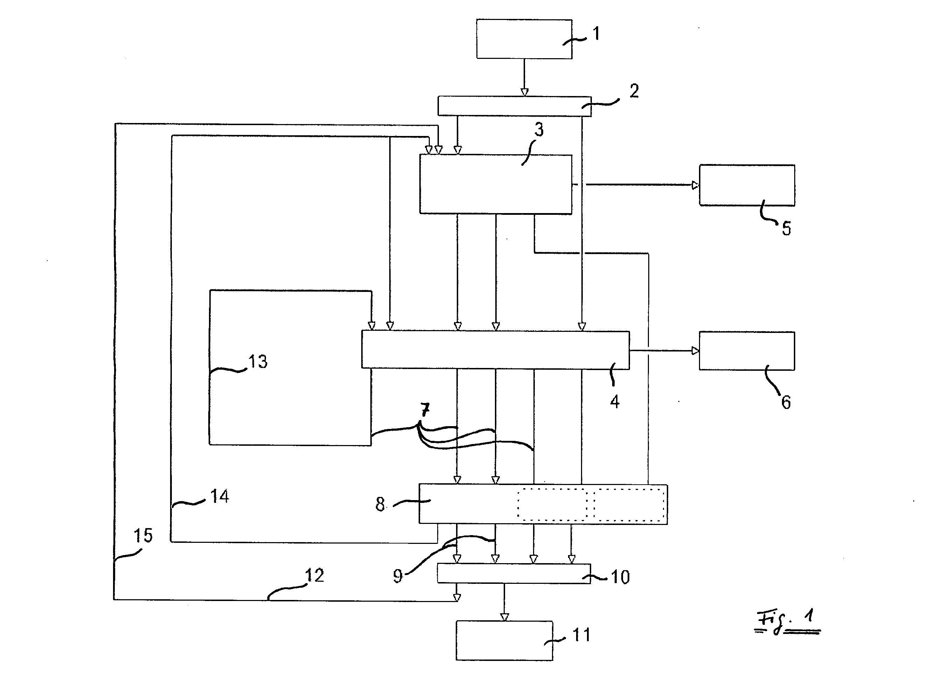

In der Figur 1 erkennt man die Prinzipsskizze einer Papiermaschine sowie der an dieser vorzufindenden Wasserströme.

Frischwasser 1 wird in eine Frischwasseraufbereitung 2 eingeleitet, in der es je nach Bedarf gefiltert, entmineralisiert oder ähnliches wird.

Aus der Frischwasseraufbereitung wird Wasser entweder in eine Stoffaufbereitung 3 geleitet oder aber unmittelbar in eine Papiermaschine 4. In der Stoffaufbereitung wird z. B. Holzschliff oder ähnlichen zerkleinert, so dass eine Pulpe entsteht und ggf. werden hier auch Abfallstoffe 5 entsorgt.

Die aus aufbereitetem Stoff sowie Frisch- und Brauchwasser bestehende Mischung wird dann in die Papiermaschine 4 eingeleitet, wo ein Teil des Wassers als Dampf 6 verdampft, während andererseits auch abgesiebtes Wasser als Siebwasser weiterverarbeitet wird.

Dieses Siebwasser kann beispielsweise einem Stofffänger 8 zugeführt werden, den es als Klarwasser 9 verlässt. Derartiges Klarwasser wird dann üblicherweise einer Abwasserreinigung 10 zugeführt, von der es entweder in das Abwasser 11 abgeleitet wird oder aber als gereinigtes Abwasser 12 wieder verwandt wird.

Es ist dabei bekannt, Siebwasser 7, das aus der Papiermaschine 4 austritt, in einem Primärkreislauf 13 unmittelbar wieder der Papiermaschine zuzuführen, wobei ein derartiger Primärkreislauf einen Volumen von 100 - 200 m³/t umfasst.

Das Klarwasser 9 kann auch in einem Sekundärkreislauf 14 geführt werden mit einem Volumen von 10 - 50 m³/t und entweder der Stoffaufbereitung 3 oder aber der Papiermaschine 4 wieder zugeführt werden.

Des Weiteren ist es bekannt, das gereinigte Abwasser 12 in einem Tertiärkreislauf 15 mit einem Volumen von 1 - 5 m³*l*t zu führen.

In den genannten Kreisläufen kann es aufgrund der in diesen vorhanden, aus dem Papiermaterial stammenden organischen Inhaltsstoffen zu unerwünschten Bakterienwachstum kommen. Dieses führt beispielsweise zu Schleim- oder Schlammbildung, die erfindungsgemäß unterdrückt werden sollen.

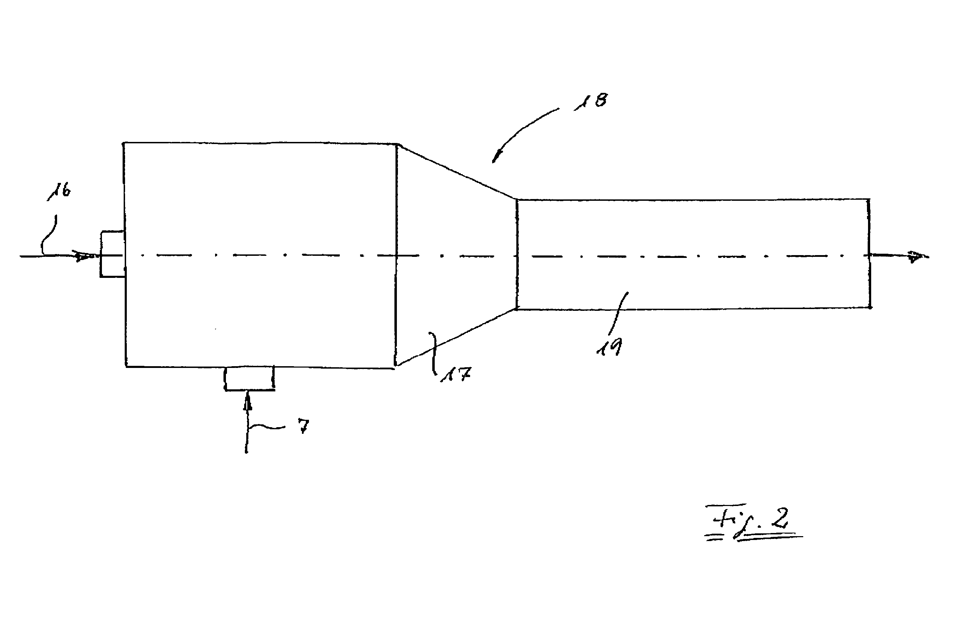

Hierzu wird insbesondere z. B, in den Primärkreislauf 13 eine Vorrichtung eingebaut, wie sie in der Figur 2 dargestellt ist.

Bei dieser wird Dampf, wie er üblicherweise in Papierfabriken standardmäßig vorgehalten wird, über eine Leitung 16 in die Mischvorrichtung 18 mit einem Druck zwischen 0,1 bar und 5 bar, insbesondere mit etwa 3 bar und einer Temperatur von 100 °C - 160 °C, vorzugsweise etwa 140 °C eingebracht und durch in der Mischvorrichtung vorhandene, hier nicht detailliert dargestellte Düsen (insbesondere Laval-Düsen) in bekannter Weise auf eine Geschwindigkeit beschleunigt, die über seiner Schallgeschwindigkeit liegt. Dann wird diesem mit Überschallgeschwindigkeit strömendem Dampf z. B. Siebwasser 7 aus dem Primärkreislauf 13 zugemischt. Dieses Siebwasser kann dabei eine Temperatur zwischen 5 und 60 °C haben und hat insbesondere eine Temperatur, die in dem Bereich von ca. 40 °C liegt. Das Verhältnis von Masse an Dampf 16 zu Masse an zugeführtem Siebwasser 7 liegt dabei beispielsweise in einem Bereich von 2:100.

Das entstehende Gemisch aus Dampf und Siebwasser wird dann in einer der Mischzone 17 nachgeschalteten Strecke 19 in der Mischvorrichtung 18 einem kontrollierten Verdichtungsstoß unterzogen, wobei der Dampf an der Stelle des Verdichtungsstoßes kondensiert wird und gleichzeitig das Gemisch auf eine Geschwindigkeit gebremst wird, die unterhalb der Schallgeschwindigkeit dieses Gemisches liegt.

Die Stelle des Verdichtungsstoßes kann dabei in Strömungsrichtung eng begrenzt festgelegt werden, sei es durch Zumischung von weiterem Siebwasser oder aber durch entsprechende konstruktive Maßnahme stromabwärts der Stelle des Verdichtungsstoßes.

Aufgrund des Verdichtungsstoßes werden auf Partikel, die vom Brauchwasser mitgeschleppt werden, extrem hohe Scherkräften ausgeübt, die zu einem Platzen dieser Partikel führen.

Aufgrund dieser Zerfaserung und des Zerplatzens von Partikeln können damit Bakterien innerhalb des Primärkreislaufes 7 verringert werden, wobei bei von der Anmelderin durchgeführten Experimenten die Bakterienlast innerhalb des Brauchwassers auf Werte erheblich geringer als 1 ‰ abgesenkt werden konnten:
Konkret wurde Siebwasser einer Wellpappenrohpapiermaschine mit dem beschriebenen Verfahren behandelt.

Es wurde mit einer Pumpe Siebwasser entnommen und erfindungsgemäß mit Dampf in einer auch als Injektor bezeichneten Mischvorrichtung vermischt und die Temperaturerhöhung ermittelt. Die Proben wurden in einem externen Wasserlabor hinsichtlich Keimzahlen untersucht.

Für den Kurzversuch wurde das Siebwasser nicht in einen Kreislauf zurückgeführt, sondern in die Kanalisation geleitet.

Das Siebwasser hatte eine Temperatur von 49,4 °C, der Dampf lag mit 0,4 bar und einer Temperatur von 110,8 °C vor. Die Mischung ergab eine Ausgangstemperatur von 65 °C, bei einem Volumenstrom von 2418 l/h. Die eingesetzte Dampfmenge betrug ca. 3 %.

Die Keimzahlbelastung sank bei diesem Experiment von 40.000.000 Keimen/ml Flüssigkeit auf 83.000 Keime/ml.

Es ist somit bei einer Anwendung des beschriebenen Verfahrens sogar ausreichend, das vom Siebwasser 7 lediglich ein Teilstrom durch die Mischvorrichtung 18 geführt wird, um die Bakterienlast im Gesamtstrom signifikant zu reduzieren.

Es ist aber auch möglich, eine Mischvorrichtung 18, wie sie in der Figur 2 dargestellt ist, bereits in die Stoffaufbereitung 3 zu integrieren und hier z. B. die Partikel, die normalerweise gemahlen werden, dem Verdichtungsstoß zu unterziehen. Diese können durch diesen speziell aufgefasert und fibrilliert werden.

Außerdem ist es möglich, vor einem ggf. beabsichtigten De-Inken mit Druckfarben versehene Fasern über eine Mischvorrichtung 18 wie in der Figur 2 dargestellt zu leiten, da in diesem im Bereich des Verdichtungsstoßes die Druckfarben von den sie tragenden Partikeln gelöst werden.

Selbstverständlich ist es dabei im Sinn der Erfindung, wenn bei Verwendung einer Mischvorrichtung 18 innerhalb der Stoffaufbereitung 3 der vollständige Strom über diese Mischvorrichtung geleitet wird und nicht wie oben beschrieben lediglich ein Teilstrom.

## Patentansprüche

1. Verfahren zur Behandlung von Brauchwasser bei der Papierherstellung, bei dem Dampf und Brauchwasser gemischt werden,
**dadurch gekennzeichnet,**
**dass** der Dampf zunächst auf eine Geschwindigkeit beschleunigt wird, die über seiner Schallgeschwindigkeit liegt, und ihm dann Brauchwasser zugemischt wird und das dann in dem sich ergebenden Gemisch der Dampf in einem Verdichtungsstoß kondensiert wird und das Gemisch auf eine Geschwindigkeit gebremst wird, die unterhalb der Schallgeschwindigkeit des Gemisches liegt.

2. Verfahren gemäß Anspruch 1,
**dadurch gekennzeichnet,**
**dass** das Brauchwasser aus dem Siebwasser, aus dem Klarwasser oder aus dem gereinigten Abwasser der Papierherstellung stammt.

3. Verfahren gemäß Anspruch 2,
**dadurch gekennzeichnet,**
**dass** das Brauchwasser ein Teilstrom der genannten Wasser ist.

4. Verfahren gemäß Anspruch 1,
**dadurch gekennzeichnet,**
**dass** das Brauchwasser Druckfarben tragende Faserrohstoffe enthält.

5. Verfahren gemäß Anspruch 1,
**dadurch gekennzeichnet,**
**dass** das Brauchwasser Fasern trägt, die gekürzt und fibrilliert werden.
